# EUROPÄISCHE PATENTANMELDUNG

(11) **EP 0 542 688 A1**
(43) Veröffentlichungstag der Anmeldung: **19.05.1993**
(21) Anmeldenummer: 92810861.2
(22) Anmeldetag: 06.11.1992
(51) Int. Cl.: H01R 43/055, H01R 43/045, B23P 19/00

(54) **Positioniertrommel für Kabelendhülsen**

(30) Priorität: 12.11.1991 CH 3287/91
(71) Anmelder: Schneider, Friedrich, CH-5512 Wohlenschwil (CH)
(72) Erfinder: Schneider, Friedrich, CH-5512 Wohlenschwil (CH); Twerenbold, Hansruedi, CH-5512 Büblikon (CH)
(74) Vertreter: Winkler, Kurt, Dr.

(57) **Zusammenfassung**

Die feststehende Scheibe (1) und die drehbare Scheibe (2) sitzen auf der Achse (3) und sind durch den Distanzring (4) voneinander getrennt. Die durch den Durchbruch (10) eingefüllten, im Hohlraum (8) lose angehäuften Kabelendhülsen ordnen sich selbsttätig durch jede Drehbewegung der Scheibe (2) derart, dass ihre Klemmteile in den Spalt (5) hineinschwenken. Eine davon (17) gleitet durch den Gleitkanal (13) in die Auffangrinne (14), womit sie zur Crimpung bereits positioniert ist. Sobald sie entfernt wird, gleitet die nachgerückte, im Gleitkanal zwischenstationierte Kabelendhülse (16) in die Auffangrinne (14). Dieser Vorgang wiederholt sich ständig, wodurch die Arbeitsgänge zügig nacheinander ablaufen können. Es ergibt sich dadurch eine wesentliche Zeiteinsparung.

Die erfindungsgemässe Positioniertrommel wird vorzugsweise mit einer Crimpzange zusammengebaut, sie lässt sich aber auch auf einem Arbeitstisch montieren.

## Beschreibung

Die Erfindung betrifft eine Positioniertrommel für die verwendungsbereite Positionierung einer Kabelendhülse zur Montage auf ein Drahtende.

Kabelendhülsen werden bei fast allen Verdrahtungen verwendet, beispielsweise bei der Zuführung eines Kabels zu einem Stromverteilerschrank. Sie dienen zur verlässlichen Fassung und Sicherung der feinen Litzen sowie zur besseren Handhabung jedes einzelnen Drahtes. Für die Montage der Hülsen, Crimpung genannt, wird zuerst von den letzten Millimetern der Drahtenden die Isolierung entfernt. Hierauf wird auf jedes Drahtende eine Kabelendhülse aufgesetzt, wobei das Ende der Drahtisolierung in den Schaft und das blanke Drahtende in den Klemmteil der Hülse hineinreichen, worauf der letztere mit der passenden Zange gecrimpt wird.

Zur Beschleunigung dieser Arbeit ist es bekannt, eine Vormagazinierung der Kabelendhülsen vorzunehmen, doch müssen dieselben immer wieder von Hand aus in das leer gewordene Magazin nachgefüllt werden. - Weiters ist es bekannt, die Schäfte der Kabelendhülsen durch einen schmalen Zwischensteg miteinander zu verbinden und solcherart ein Band zu bilden. Dies erleichtert zwar die Arbeit, doch muss jede Hülse extra mit einem Messer abgetrennt werden, ferner kann der an jedem Hülsenschaft verbleibende Stegrest gelegentlich hinderlich sein.

Der Erfindung liegt die Aufgabe zugrunde, eine Einrichtung zu schaffen, um aus lose angehäuften Kabelendhülsen, ohne weiteren Aufwand und ohne sie in die Hand nehmen oder auch nur berühren zu müssen, eine Hülse nach der anderen positioniert bereitzustellen.

Diese Aufgabe wird durch eine Positioniertrommel gelöst, welche die kennzeichnenden Merkmale des Anspruchs 1 aufweist.

Bei der vorliegenden Erfindung werden die völlig ungeordnet in die Positioniertrommel eingeschütteten Kabelendhülsen durch eine kleine Drehbewegung der einen Scheibeselbsttätig vorgeordnet. Sie sind damit bereit, eine nach der anderen in die Auffangrinne zu gleiten, womit sie sofort für das Einführen des zu schützenden Drahtendes positioniert sind. Dies ermöglicht ein rasches Arbeiten, praktisch ohne Rüstzeiten zwischen den einzelnen Arbeitsgängen. Es ergibt sich somit eine wesentliche Zeiteinsparung.

Ein weiterer Vorteil besteht darin, dass die Positioniertrommel sowohl in eine Crimpzange eingebaut als auch auf einem Arbeitstisch montiert werden kann.

Ein Ausführungsbeispiel der Erfindung ist in der beigefügten Zeichnung in ungefährer Naturgrösse schematisch dargestellt und wird nachstehend näher erläutert. Es zeigen:
Fig.1 einen Axialschnitt durch eine Positioniertrommel;
Fig.2 die feststehende Scheibe aus Fig.1 in Ansicht bei abgehobener drehbarer Scheibe.

Wie aus der Zeichnung ersichtlich ist, sitzen die feststehende Scheibe 1 und die drehbare Scheibe 2 auf der gemeinsamen Achse 3. Sie sind durch den Distanzring 4 voneinander getrennt, wodurch sich der Spalt 5 ergibt. Dieser Distanzring ist mit der Achse aus einem Stück gefertigt, er kann aber auch lose auf der Achse sitzen. Bei entsprechender Formgebung der Scheibennaben kann der Distanzring auch in eine der Scheiben hinein verlegt sein. Beide Scheiben sind vorzugsweise aus Kunststoff gefertigt.

Die Scheibe 1 weist die Ausnehmung 6, die Scheibe 2 die Ausnehmung 7 auf. Diese Ausnehmungen sind derart aufeinander abgestimmt, dass sie gemeinsam den Hohlraum 8 bilden. In der Ausnehmung 7 ist die Abstreiflamelle 9 befestigt, die aus einem elastischen Material besteht, z.B. aus Plastik oder Gummi.

Als Einfüllvorrichtung für die Kabelendhülsen ist in der Scheibe 1 der Durchbruch 10 vorgesehen, welcher durch die um das Scharnier 11 schwenkbare Klappe 12 verschliessbar ist. Die Klappe dient gleichzeitig als Hilfsmittel für das Einfüllen der Hülsen. An ihrer Stelle kann beispielsweise auch eine einschiebbare Lade verwendet werden.

Die innenliegende Stirnwand der Scheibe 1 ist an der ungefähr tiefsten Stelle mit dem radial verlaufenden, halbkreisförmigen Gleitkanal 13 versehen, welcher vom Hohlraum 8 bis zum Aussenumfang der Scheibe reicht. Unterhalb des Kanals 13 ist die Auffangrinne 14 angeordnet, welche an der Scheibe 1 befestigt ist.

Jede Positioniertrommel ist für die Verwendung nur einer bestimmten Grösse der Kabelendhülsen vorgesehen, die bekanntlich aus Schaft und Klemmteil bestehen. Der Spalt 5 ist zufolge der gewählten Dicke des Distanzringes 4 so bemessen, dass seine Breite nur wenig, z.B. 0,2 Millimeter, grösser ist als der Durchmesser des Klemmteils der zu verwendenden Hülsen.

Der Gleitkanal 13 ist solcherart dimensioniert, dass durch ihn eine Kabelendhülse, geführt an der innenliegenden Stirnwand der Scheibe 2, zwar leicht, aber bei wenig Spiel hindurchgleiten kann. Oder anders ausgedrückt: Die Summe aus Breite des Spaltes 5 + Tiefe des Gleitkanals 13 entspricht dem Durchmesser des Schaftes der zu verwendenden Hülsen.

Der Arbeitsablauf mit der Positioniertrommel ist der folgende:

Die in die Trommel eingefüllten Kabelendhülsen - je nach Grösse ca. 30 bis 40 Stück - sind nach dem Einfüllen im Hohlraum 8 lose angehäuft. Durch zwei oder drei Drehbewegungen der Scheibe 2 - es genügt ein Drehwinkel von 5° bis 10° - ordnen sich die Kabelendhülsen 15 selbsttätig derart, dass von den zu unterst liegenden die aus Metall bestehenden Klemmteile zufolge ihrer Schwere in den Spalt 5 einschwenken und sich senkrecht stellen, während ihre leichteren, aus Isoliermaterial bestehenden Schäfte an den schrägen Flächen der Ausnehmungen 6 und 7 hängenbleiben.

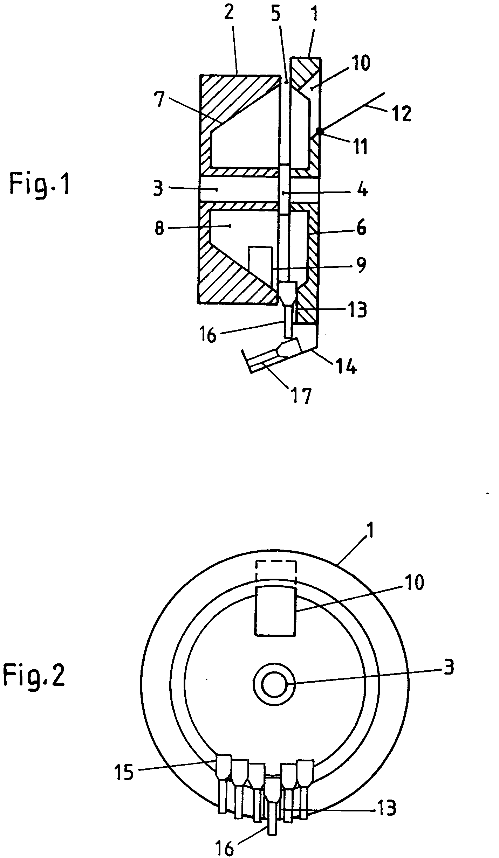

Sobald durch die Drehbewegung eine Hülse 16 zum Gleitkanal 13 kommt, gleitet sie in diesen hinein. Eine solche Vorordnung der Kabelendhülsen ist aus Fig.2 zu ersehen. Ist die Auffangrinne 14 zu Anfang noch leer, gleitet die Hülse weiter und nimmt von selbst in der Auffangrinne die für die Crimpung erforderliche Position ein (Hülse 17 in der Zeichnung). Eine zweckentsprechende Formgebung und Neigung der Auffangrinne ist dafür Voraussetzung.

Die Auffangrinne 14 ist nun besetzt, der Gleitkanal 13 jedoch wieder leer. Daher gleitet eine benachbarte Kabelendhülse, meist schon durch den Gewichtsdruck der übrigen oder durch die nächste Drehbewegung der Scheibe 2, zur Zwischenstationierung in den Gleitkanal 13 hinein. Mit jeder Entnahme einer Hülse aus der Auffangrinne wiederholt sich dieser Vorgang, es gelangt eine Hülse nach der anderen, nach kurzer Stationierung im Gleitkanal 13, in die Auffangrinne 14, wo die Crimpung erfolgt. So können die Arbeitsgänge zügig nacheinander ablaufen.

Für den Fall, dass bei leer gewordenem Gleitkanal von beiden Seiten eine Hülse nachrückt und es eine kleine Stauung gibt, ist die Abstreiflamelle 9 vorgesehen. Zufolge ihrer Elastizität streicht sie bei jeder Drehbewegung über die Reihe der vorgeordneten Hülsen hinweg, ohne deren Lage zu verändern, während darüber hinausragende oder daraufliegende Hülsen mitgenommen werden. So ist dafür gesorgt, dass während der Benützung der Positioniertrommel keine Stockung auftreten kann und der frei gewordene Gleitkanal immer zugänglich ist und wieder besetzt wird.

Die Drehbewegung der Scheibe 2 erfolgt in kleinen Einzelschritten, sie ist also begrenzt. Sie kann von Hand aus, z.B. mit dem Daumen, oder auf einfache Art mechanisch durchgeführt werden, Letzteres lässt sich vorteilhafterweise mit der Auf- und Zubewegung der Crimpzange verbinden. In beiden Fällen kann die Drehbewegung fortlaufend oder oszillierend sein.

Bei fortlaufender Drehbewegung, die leicht durch eine Rätsche an der Scheibe 2 erzeugt werden kann, ist es zweckmässig, zwei oder drei Abstreiflamellen 9 vorzusehen, die über den Umfang der Ausnehmung 7 verteilt sind. Es wird dadurch vermieden, dass es zu lange braucht, bis eine nur einzeln vorhandene Lamelle zur Wirkung kommt.

Wie schon oben erwähnt, wird die Positioniertrommel jeweils für eine bestimmte Grösse der Kabelendhülsen ausgelegt. Für eine andere Grösse ist sowohl der Distanzring 4 auszuwechseln, um die entsprechende Breite des Spaltes 5 zu erzielen, als auch die Scheibe 1 wegen der genauen Anpassung des Gleitkanals 13. Für sämtliche Ausführungen kann jedoch die gleiche drehbare Scheibe 2 verwendet werden.

Die erfindungsgemässe Positioniertrommel kann mit einfachen Hilfsmitteln versehen werden, um sie in eine gebräuchliche Crimpzange einzubauen. Die feststehende Scheibe kann auch zusammen mit dem Zangengehäuse gegossen werden. Die Trommel lässt sich auch derart mit nur wenigen dafür notwendigen Hilfsmitteln ausstatten, dass sie auf einem Arbeitstisch montierbar ist.

## Patentansprüche

1. Positioniertrommel für die verwendungsbereite Positionierung einer Kabelendhülse zur Montage auf ein Drahtende, dadurch gekennzeichnet, dass
- die Trommel im wesentlichen aus einer feststehenden Scheibe (1) und einer drehbaren Scheibe (2) sowie aus einer Auffangrinne (14) für die zur Montage positionierte Kabelendhülse (17) besteht;
- beide Scheiben (1,2) durch eine gemeinsame Achse (3) verbunden sind, auf welcher ein die beiden Scheiben voneinander trennender Distanzring (4) sitzt;
- beide Scheiben (1,2) je eine Ausnehmung (6 bzw.7) aufweisen, welche sich zu einem Hohlraum (8) ergänzen für die Aufnahme von lose eingeschütteten Kabelendhülsen (15), die bei jeder Drehbewegung der Scheibe (2) sich selbsttätig zwischen den beiden Scheiben vorordnen;
- die feststehende Scheibe (1) mit einem Gleitkanal (13) versehen ist, durch den jeweils eine Kabelendhülse (17) aus dem Hohlraum (8) in die leere Auffangrinne (14) gleitet;
- der Gleitkanal (13) bei besetzter Auffangrinne (14) zur Zwischenstationierung der nächsten zu positionierenden Kabelendhülse (16) dient.

2. Positioniertrommel nach Anspruch 1, dadurch gekennzeichnet, dass die Drehbewegung der Scheibe (2) begrenzt ist.

3. Positioniertrommel nach Anspruch 2, dadurch gekennzeichnet, dass die Drehbewegung der Scheibe (2) oszillierend ist.

4. Positioniertrommel nach Anspruch 1, dadurch gekennzeichnet, dass die Scheibe (2) mindestens eine mitdrehende Abstreiflamelle (9) aus elastischem Material aufweist.

5. Positioniertrommel nach Anspruch 1, dadurch gekennzeichnet, dass die Scheibe (1) mit einer Einfüllvorrichtung (10,12) für die Kabelendhülsen (15) versehen ist.

6. Positioniertrommel nach Anspruch 1, dadurch gekennzeichnet, dass Mittel vorgesehen sind, um die Trommel in eine Crimpzange einzubauen.

7. Positioniertrommel nach Anspruch 1, dadurch gekennzeichnet, dass Mittel vorgesehen sind, um die Trommel auf einem Arbeitstisch zu montieren.
